# EUROPEAN PATENT APPLICATION

(11) **EP 4 650 847 A1**
(43) Date of publication of application: **19.11.2025**
(21) Application number: 25176473.4
(22) Date of filing: 14.05.2025
(51) Int. Cl.: G02B 6/44

(54) **SPLICE SLEEVE HOLDERS AND TRAYS INCLUDING THE SAME**

(30) Priority: 16.05.2024 US 202463648380 P
(71) Applicant: CORNING RESEARCH & DEVELOPMENT CORPORATION, Corning NY 14831 (US)
(72) Inventor: ALLEN, William, Texas, 78750 (US); MARKOS, Laszlo, Texas, 78634 (US)
(74) Representative: Elkington and Fife LLP

(57) **Abstract**

A splice sleeve holder configured to retain splice sleeves includes a base substrate and a plurality of retaining walls extending from the base substrate. The plurality of retaining walls include a first retaining wall, a second retaining wall and a third retaining wall, wherein each of the plurality of retaining walls extend from a first end to a second end in a longitudinal direction, a first channel is defined between the first retaining wall and the second retaining wall, and a second channel is defined between the second retaining wall and the third retaining wall. Each of the plurality of retaining walls includes one or more retaining protrusions, wherein the one or more retaining protrusions are arranged to retain a splice sleeve of the first channel in a vertically staggered configuration relative to a splice sleeve of the second channel.

## Description

This application claims the benefit of priority of U.S. Provisional Application No. 63/648,380 filed on May 16, 2024, the content of which is relied upon and incorporated herein by reference in its entirety.

### TECHNICAL FIELD

The present specification generally relates to splice sleeve holders and trays including splice sleeve holders, and more particularly to splice sleeve holders and trays for optical fiber spliced connections.

### BACKGROUND

Spliced connections between fiber optic fibers may be stabilized by splice sleeves. The protect against movement of the splice sleeves, and thereby maintain the spliced connection contained therein, the splice sleeves may be organized within an enclosure, such as by a splice sleeve holder within a tray, for example. However, traditional splice sleeve holders may be unsuitable for retaining different sizes of splice sleeves or layers of splice sleeves, thereby limiting the types of splice sleeves used or the number of retained splices. In some instances, these discrepancies in sizes may result in the splice sleeve holder providing poor resistance to movement of the splice sleeves contained therein. Where the splice sleeves are not adequately restrained, spliced connections can be damaged in response to shock or vibration.

While some splice sleeve holder may include retention features, such as independent molded fingers, to prevent unwanted movement of the spliced connection, such features are often bulky and may further limit the number of spliced connections capable of being housed within a given area. In other words, the density of spliced connections may be reduced. Moreover, such features are often difficult to manufacture due to complex injection molds with very small features and mold shutoffs that are difficult to build and maintain.

Accordingly, improved splice sleeve holders providing reliable retention for splice sleeves of varying sizes while increasing capacity is desirable.

### SUMMARY

Additional features and advantages of the present disclosure will be set forth in the detailed description, which follows, and in part will be apparent to those skilled in the art from that description or recognized by practicing the embodiments described herein, including the detailed description, which follows the claims, as well as the appended drawings.

In one embodiment, a splice sleeve holder configured to retain splice sleeves includes a base substrate and plurality of retaining walls extending from the base substrate. The plurality of retaining walls includes a first retaining wall, a second retaining wall and a third retaining wall. Each of the plurality of retaining walls extend from a first end to a second end in a longitudinal direction. A first channel is defined between the first retaining wall and the second retaining wall. A second channel is defined between the second retaining wall and the third retaining wall. Each of the plurality of retaining walls includes one or more retaining protrusions, wherein the one or more retaining protrusions are arranged to retain a splice sleeve of the first channel in a vertically staggered configuration relative to a splice sleeve of the second channel.

In another embodiment, a splice sleeve holder configured to retain splice sleeves includes a base substrate and a plurality of retaining walls extending from the base substrate. Each of the plurality of retaining walls extends from a bottom surface to a top surface in a vertical direction and from a first end to a second end in a longitudinal direction. Each of the plurality of retaining walls includes an upper portion, wherein adjacent upper portions are arranged to retain an upper sleeve therebetween; and a lower portion, wherein adjacent lower portions are arranged to retain a lower sleeve therebetween beneath the upper sleeve. The lower portion includes a least one cavity extending from the bottom surface.

In yet another embodiment, a fiber routing tray includes a tray body, a splice sleeve holder configured to retain splice sleeves, and a recess. The splice sleeve holder includes a base substrate, a plurality of retaining walls extending from the base substrate, and one or more tabs. The plurality of retaining walls include a first retaining wall, a second retaining wall and a third retaining wall. Each of the plurality of retaining walls extend from a first end to a second end in a longitudinal direction. A first channel is defined between the first retaining wall and the second retaining wall. A second channel is defined between the second retaining wall and the third retaining wall. Each of the plurality of retaining walls comprises one or more retaining protrusions, wherein the one or more retaining protrusions are arranged to retain a splice sleeve of the first channel in a vertically staggered configuration relative to a splice sleeve of the second channel. The recess is configured to secure the one or more tabs to the tray body.

It is to be understood that both the foregoing general description and the following detailed description describe various embodiments and are intended to provide an overview or framework for understanding the nature and character of the claimed subject matter. The accompanying drawings are included to provide a further understanding of the various embodiments and are incorporated into and constitute a part of this specification. The drawings illustrate the various embodiments described herein, and together with the description, explain the principles and operations of the claimed subject matter.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a fiber routing tray, according to one or more embodiments shown and described herein;
FIG. 2 schematically depicts a splice sleeve holder of the fiber routing tray of FIG. 1, according to one or more embodiments shown and described herein;
FIG. 3 schematically depicts a top view of the splice sleeve holder of FIG. 2, according to one or more embodiments shown and described herein;
FIG. 4A schematically depicts a longitudinal cross section of the splice sleeve holder of FIG. 2, according to one or more embodiments shown and described herein;
FIG. 4B depicts a perspective view of the splice sleeve holder of FIG. 4A, according to one or more embodiments shown and described herein;
FIG. 5 schematically depicts a lateral cross section of the splice sleeve holder of FIG. 2, according to one or more embodiments shown and described herein; and
FIG. 6 schematically depicts a side view of the splice sleeve holder of FIG. 2, according to one or more embodiments shown and described herein.

### DETAILED DESCRIPTION

Reference will now be made in detail to various embodiments of devices, assemblies, and methods, examples of which are illustrated in the accompanying drawings. Whenever possible, the same reference numerals will be used throughout the drawings to refer to the same or like parts.

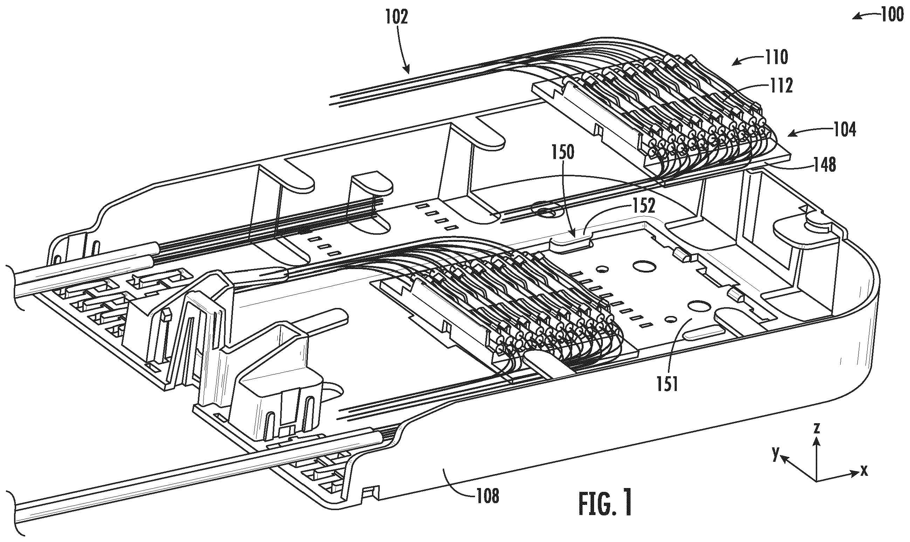

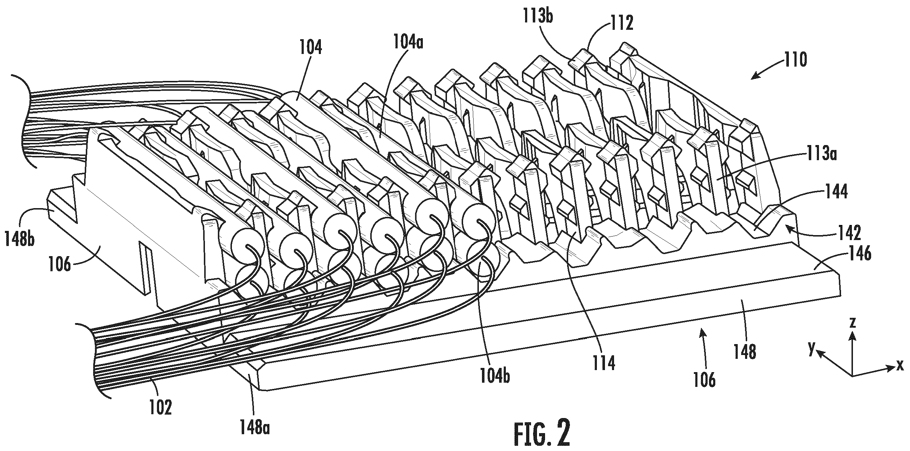

FIGS. 1 and 2 schematically depict a splice sleeve holder configured to retain splice sleeves. The splice sleeve holder may include a plurality of retaining walls extending from a first end to a second end in a longitudinal direction. The plurality of retaining walls define channels extending between each of the plurality of retaining walls. The plurality of retaining walls comprises retaining protrusions disposed on the first end, wherein the retaining protrusions are arranged to retain the splice sleeves in a staggered configuration. The staggered arrangement of the sleeves may enable a greater density of splice sleeves without sacrificing the retaining strength of the retaining walls.

Directional terms as used herein - for example up, down, right, left, front, back, top, bottom - are made only with reference to the figures as drawn and are not intended to imply absolute orientation unless otherwise specified. As used herein, "inward" is used directionally to refer to the direction away from a perimeter of the fiber routing tray. Correspondingly, as used herein, "outward" is used directionally to refer to the direction toward the perimeter of the fiber routing tray. As used herein, the terms "longitudinal," "lateral," and "vertical" are used to refer to three orthogonal directions of a rectangular coordinate system. The term "longitudinal" is used directionally to refer to the direction along the elongated length of the retaining walls of the splice sleeve tray and is generally aligned with the Y axis of the depicted coordinate systems. "Lateral" is used directionally to refer to the direction normal to the elongated length of the retaining walls and is generally aligned with the X axis of the depicted coordinate systems. "Vertical" is used directionally to refer to the direction orthogonal to the longitudinal direction and the lateral direction and is generally aligned with the Z axis of the depicted coordinate systems.

As used herein, the term "fiber routing tray" refers to a tray for storage and containment of connections between cables (particularly individual fiber optic fibers, which are spliced to one another). For example, while the present specification is generally described in terms of fiber optic connections, fiber enclosures according to the present disclosure may include enclosures for electrical and/or other types of connections. In some embodiments, the fiber routing tray may hold spliced connections and/or connectorized connections between distribution cables and drop fiber cables, though other uses are contemplated and possible. The term "fiber routing tray" may refer to an open tray or to a fully encapsulated enclosure.

As used herein, the terms "sleeves" or "splice sleeves" refer to protective structures which surround spliced connections and/or connectorized connection. Splice sleeves may include coatings, tubing (such as heat-shrink tubing), or the like, which operate to maintain and protect the splice connections and/or connectorized connections. Final (e.g., shrunk) diameter of a splice sleeve may vary due to the diameter of the coated fiber used and typical manufacturing tolerances. For example, typical nominal fiber coatings may vary in thickness, such as between about 250µm to about 900µm. The most common splice sleeves for single fusion splices have diameters that may be about 2.4mm or about 3.0mm. Final (e.g., shrunk) diameters of splice sleeves may vary from one fiber to the next about +/- 0.2 mm, for example. Such variation may make it difficult to provide sufficient holding force for all splices attached to conventional splice sleeve holders.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any device or assembly claim does not actually recite an order or orientation to individual components, or it is not otherwise specifically stated in the claims or description that the steps are to be limited to a specific order, or that a specific order or orientation to components of an device or assembly is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

Referring FIG. 1, an embodiment of a fiber routing tray 100 is schematically depicted. The fiber routing tray 100 may include a tray body 108 and a splice sleeve holder 110 configured to support a plurality of spliced connections of fibers 102. The spliced connections of the fibers 102 may be enclosed in sleeves 104. In embodiments, the tray body 108 may include one or more retention features 150 for retaining the splice sleeve holder 110 therein. For example, the one or more retention features 150 include a recess 151 extending into the tray body 108 and sized and shaped to receive the splice sleeve holder 110. In some embodiments, the one or more retention features 150 may include a tab(s) 152 which extends over the received splice sleeve holder 110 to hold the splice sleeve holder 110 within the recess 151. In embodiments, the recess 151 may be sized to receive an array of splice sleeve holders 110. In some embodiments, there may be multiple independent recesses each sized and shaped to receive a single splice sleeve holder 110.

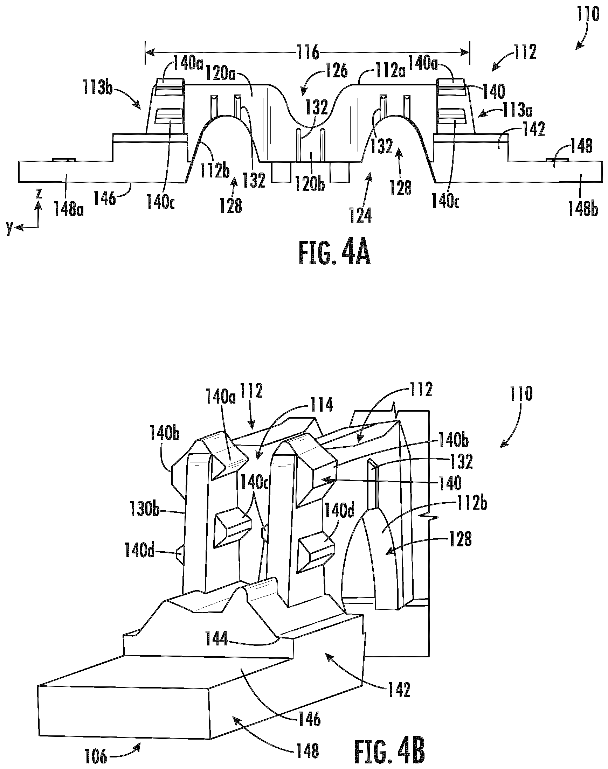

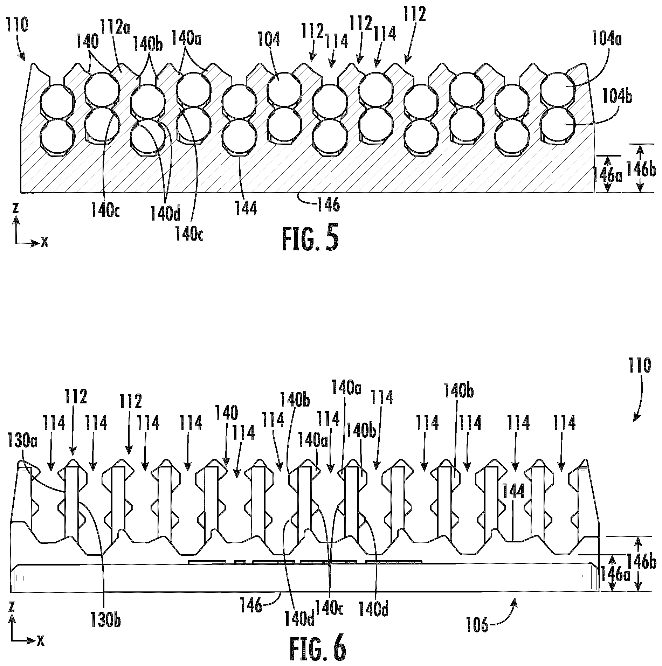

Referring collectively to FIGS. 2-6 a splice sleeve holder 110 is depicted in isolation from the tray body 108 and is shown in FIGS. 2 and 5 as holding a plurality of sleeves 104 enclosing spliced connections therein. The splice sleeve holder 110 may include a plurality of retaining walls 112 extending vertically from a base substrate 106. The plurality of retaining walls 112 define channels 114 disposed between adjacent retaining walls 112. Each of the retaining walls 112 may have an elongated shape defining a length 116, indicated in FIG. 4, between a first end 113a and a second end 113b. Each length 116 may be arranged in a longitudinal direction (i.e. the +/- Y direction of the depicted coordinate system), and the retaining walls 112 may be aligned in a lateral direction (i.e. the +/- X direction of the depicted coordinate system) orthogonal to the lateral direction. The splice sleeve holder 110 may include any number of retaining walls 112, such as 2 or more, 5 or more, 7 or more, 10 or more, 13 or more, etc. Each retaining wall 112 may be substantially identical to one another, except as described in further detail below.

As noted above, a channel 114 is positioned between each adjacent retaining wall 112. The channels 114 may be sized to accommodate the sleeves 104 covering the spliced connections between fibers 102. More specifically, each of the channels 114 may be sized to accommodate an upper sleeve 104a and a lower sleeve 104b positioned below the upper sleeve 104a, such as best depicted in FIG. 2 and 5.

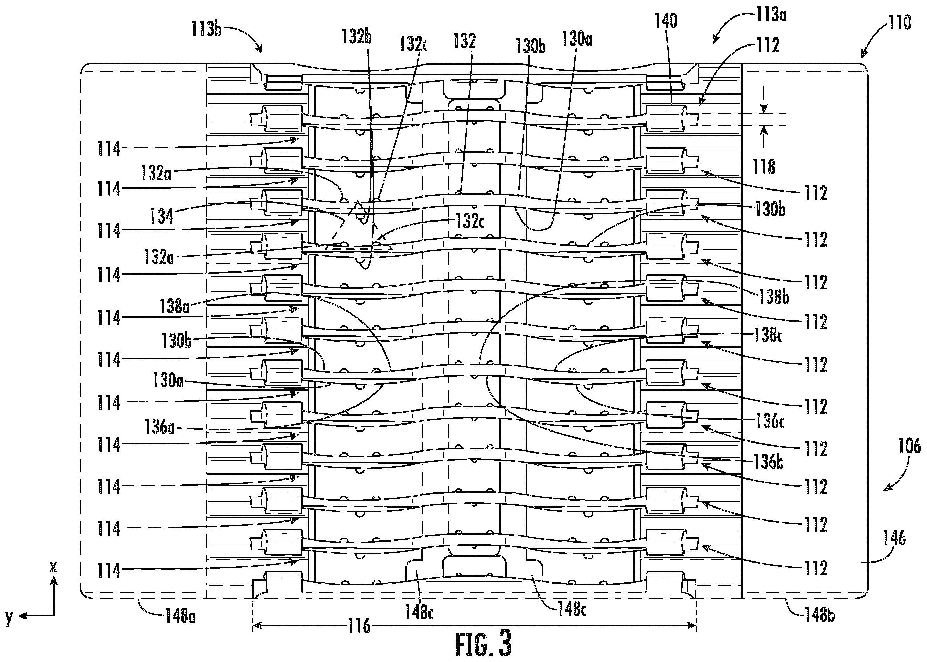

FIG. 3 depicts a top down view of the splice sleeve holder 110 in the vertical direction (i.e., along the Z-direction of the depicted coordinate axes) in isolation from the fibers 102 and sleeves 104. As illustrated, each of the retaining walls 112 may have a wall thickness 118 in the lateral direction. More specifically, the wall thickness 118 may extend laterally between a first side 130a and a second side 130b opposite the first side 130a. The wall thickness 118 may be sized to maintain a desired stiffness of the retaining walls 112. In particular, the wall thickness 118 may be sized to provide stiffness adjacent the sleeves 104 such that the sleeves 104 are retained in place. Stated another way, the wall thickness 118 may contribute to the ability of the retaining wall 112 to flex in the lateral direction to accommodate positioning a sleeves 104 therein and providing a gripping force (due to spring bias) to grip sleeves 104 once positioned therein.

Referring now to FIGS. 4A-6, each of the retaining walls 112 may have an upper portion 120a adjacent a top surface 112a of the retaining wall 112 and a lower portion 120b adjacent a bottom surface 112b of the retaining wall 112. When splice sleeves are positioned within the channels 114, as noted above, the upper portions 120a of the retaining walls may contact the upper sleeves 104a, and the lower portions 120b may contact the lower sleeves 104b, as best depicted in FIG. 5.

In some embodiments, the retaining walls 112 may have cavities 124 or voids extending into the retaining walls 112 from a top side and a bottom side of the retaining walls 112 a vertical direction (i.e. extending into the retaining walls 112 in the +/- z direction of the depicted coordinate system). Stated another way, the top surface 112a and/or the bottom surface 112b may include curved regions to provide the cavities 124. In particular, in some embodiments, the retaining walls 112 may have one or more top cavities 126 and one or more bottom cavities 128. The one or more top cavities 126 and one or more bottom cavities 128 may alternate in the longitudinal direction (i.e. the +/- Y direction of the depicted coordinate system). Stated another way, the one or more top cavities 126 may be longitudinally offset from the one or more bottom cavities 128 such that the one or more top cavities 126 and the one or more bottom cavities 128 are not aligned in the vertical direction. While any number of cavities are contemplated and possible, in some embodiments, each of the retaining walls 112 may have one top cavity 126 positioned longitudinally between two bottom cavities 128 so as to provide an M-shape such as depicted in FIG. 4.. As will be described in greater detail herein, the cavities 124 may be arranged to minimize impact of position or translated movement between the upper portions 120a of the retaining walls 112 and the lower portions 120b of the retaining walls 112. Accordingly, impact due to variations in sleeve size between the upper portions 120a and the lower portions 120b may be minimized.

For example, by alternating the one or more top cavities 126 and the one or more bottom cavities 128 in the longitudinal direction, the amount of material extending between the upper portion 120a and the lower portion 120b in the vertical direction (i.e. in the +/- Z direction of the depicted coordinate system) may be reduced thereby allowing substantially independent motion of the upper portion 120a relative to the lower portion 120b. This may assist in isolating the upper portion 120a from the lower portion 120b and may decrease the amount of translated motion actually experienced by the upper portion 120a and the lower portion 120b. As an example, if a force caused movement of the upper sleeve 104a or the upper portion 120a, then the upper portion 120a would move or flex largely independently of the lower portion 120b. In such a circumstance, much of the movement would not translate to the lower portion 120b, and the lower portion 120b would remain relatively stationary. In this way, the lower sleeves 104b may be protected from motion of the upper sleeves 104a and/or the upper portion 120a. In a similar manner, the upper sleeves 104a may be protected from motion of the lower sleeves 104b and/or the lower portion 120b. Stated anoter way, the cavities 126 allow for independent gripping response between the upper portion120a and the lower portion 120b.

Other arrangements of cavities are contemplated and possible. For example, in some embodiments, each of the retaining walls 112 may have one bottom cavity 128 positioned longitudinally between two top cavities 126, so as to prove a W-shaped retaining wall. In other embodiments, some of the retaining walls 112 may have one bottom cavity 128 positioned longitudinally between two top cavities 126 while others of the retaining walls 112 have one top cavity 126 positioned longitudinally between two bottom cavities 128. Although each of the retaining walls 112 is depicted as having three cavities 124, in other embodiments, the retaining walls 112 may have more or fewer cavities 124.

Referring to FIGS. 3-4B in combination, each of the retaining walls 112 may have plurality of standoffs 132 extending into the channels 114 (i.e. extending the +/- X direction of the depicted coordinate system). The standoffs may be elongate protrusions extending along the retaining walls 112 in the vertical direction (i.e., extending in the +/- Z direction of the depicted coordinate axes). The standoffs 132 may grip the sleeves 104 when assembled within the channels 114, thereby securing the sleeves 104 relative to the retaining walls 112 (e.g., for example preventing slippage in the longitudinal direction). In some embodiments, the standoffs 132 may be positioned on the upper portion 120a and the lower portion 120b. The standoffs 132 on the upper portion 120a may grip the upper sleeves 104a, while the standoffs 132 on the lower portion 120b may grip the lower sleeves 104b.

As depicted particularly in FIG. 4A and 4B, in some embodiments, the standoffs 132 may extend vertically from the bottom surface 112b up at least a portion of the associated retaining wall 112. In some embodiments, the standoffs 132 may extend to the top surface 112a. In other embodiments, the standoffs 132 may terminate short of the top surface 112a such that an offset exists between the standoffs 132 and the top surface 112a. In some embodiments each of the standoffs 132 may have substantially the same height in the vertical direction (e.g. in the Z direction of the depicted coordinate system). In other embodiments, the heights of the standoffs 132 may vary. For example, as depicted, the standoffs 132 positioned on the lower portion 120b of the retaining walls 112 may have a larger height than the standoffs 132 positioned on the upper portion 120a of the retaining walls 112.

As depicted particularly in FIG. 3, in some embodiments, the standoffs 132 may be positioned on the first side 130a and the second side 130b in an alternating fashion with one another such that a given standoff 132a extending from the first side 130a of one of the retaining walls 112 may be disposed longitudinally between the standoffs 132b and 132c extending from the second side 130b of an adjacent wall of the retaining walls 112. Stated another way, the standoffs 132 may be positioned on the first side 130a and the second side 130b in a longitudinally alternating fashion such that the standoffs 132 are grouped in triangular gripping arrangements 134 extending into adjacent channels 114 when viewed from above.

As depicted, in some embodiments, the first side 130a of each of the retaining walls 112 may include two of the standoffs 132 on the upper portion 120a, and the second side 130b of each of the retaining walls may include four of the standoffs 132 on the upper portion 120a. As depicted, in some embodiments, the first side 130a of each of the retaining walls 112 may include one of the standoffs 132 on the lower portion 120b, and the second side 130b of each of the retaining walls may include two of the standoffs 132 on the lower portion 120b. However, other arrangements and quantities of the standoffs 132 are contemplated and possible. For example, in other embodiments, the first side 130a of each of the retaining walls 112 may include two of the standoffs 132 on the lower portion 120b, and the second side 130b of each of the retaining walls may include one of the standoffs 132 on the lower portion 120b.

As depicted in FIG. 3, the retaining walls 112 may have a curvature or wave-like geometry when viewed from above. The curvature may assist in compressing the sleeves 104 (depicted in FIG. 2) in the lateral direction which may further assist in preventing movement of the sleeves 104. In some embodiments, the first side 130a and the second side 130b may be similarly curved such that the wall thickness 118 is maintained along the length 116. In other embodiments, only the first side 130a or the second side 130b may be curved. As depicted, the first side 130a may have a concave surface 136b disposed between convex surfaces 136a, 136c. In a coordinated manner, the second side 130b may have a convex surface 138b disposed between concave surfaces 138a, 138c. Referring to FIG. 4A in combination with FIG. 3, it will now be appreciated that the lower portion 120b of the retaining walls 112 may be substantially concave on the first side 130a and may be substantially convex on the second side 130b due to the arrangement of the surfaces 136a-c, 138a-c. Similarly, the upper portion 120a of the retaining walls 112 may be substantially convex on the first side 130a and may be substantially concave on the second side 130b due to the arrangement of the surfaces 136a-c, 138a-c.

Referring now to FIG. 5 in combination with FIG. 2, the splice sleeve holder 110 may have one or more endwalls 142 disposed at the first end 113a and/or the second end 113b of the retaining walls 112. The one or more endwalls 142 may extend laterally inward such that they extend into the channels 114. Referring briefly to FIG. 4A and 4B, in some embodiments, the one or more endwalls 142 may extend longitudinally inward and up to the cavities 124. The one or more endwalls 142 may extend longitudinally outward such that they extend past the first end 113a and/or the second end 113b of the retaining walls 112. Referring back to FIGS. 2 and 5 in combination, the one or more endwalls 142 may extend vertically from a base surface 146 of the base substrate 106 . As depicted, the sleeves 104 may be positioned atop the one or more endwalls 142 when assembled. In particular, the lower sleeves 104b may contact an upper surface 144 of the one or more endwalls 142. Accordingly, upper surface 144 of the one or more endwalls 142 may assist in positioning the sleeves 104 within the channels 114. Stated another way, the vertical height of the one or more endwalls 142 may define the vertical position of the sleeves 104. In some embodiments the upper surface 144 may be rounded to mate with the curvature of the sleeves 104.

As depicted, the upper surface 144 may have a vertical height that alternates between a first height 146a and a second height 146b. Accordingly, the lower sleeves 104b may alternatively be positioned at the first height 146a and the second height 146b. This may create a staggered arrangement of the sleeves 104 within the channels 114 as shown particularly in FIGS. 2 and 6. The staggered arrangement of the sleeves 104 may enable a greater density of sleeves 104 without sacrificing the retaining strength of the retaining walls 112. Accordingly, in some embodiments, the splice sleeve holder 110 may have a greater density of sleeves 104 as compared to splice sleeve holders that do not include a staggered arrangement of the sleeves 104.

Referring to FIGS. 4A- 6 in combination, each of the retaining walls 112 may have retaining protrusions 140 extending the upper portion 120a and the lower portion 120b such as adjacent the first end 113a and the second end 113b. The retaining protrusions 140 may elongate protrusions extending in the lateral direction (i.e. the +/- X direction of the depicted coordinate system). As depicted, each of the retaining protrusions 140 in the upper portion 120a and the lower portion 120b may be vertically aligned with a coordinated retaining protrusion 140 formed on an adjacent retaining wall 112. In this way, the lateral distance between the retaining walls 112 may be decreased at the location of the retaining protrusions 140. In particular, the size of the retaining protrusions 140 may be selected to form a snap fit geometry with the sleeves 104. In other words, the lateral distance between the retaining walls 112 at the location of the retaining protrusions 140 may be less than a diameter of the sleeves 104. In this way, a threshold force must be overcome to insert the sleeves 104 into the channels 114 between the retaining walls 112. Similarly, the threshold force must be overcome to remove the sleeves 104 from the channels 114. This may prevent unintentional movement or removal of the sleeves 104 once assembled within the channels 114.

Each of the retaining walls 112 may have upper protrusions 140a, 140b and lower protrusions 140c, 140d. The lower protrusions 140c, 140d may be sized and positioned to retain the lower sleeves 104b. The upper protrusions 140a, 140b may be disposed above the lower protrusions 140c, 140d and may be sized and positioned to retain the upper sleeves 104a. The upper protrusions 140a, 140b and the lower protrusions 140c, 140d may be staggered to accommodate the staggered arrangement of the sleeves 104. More specifically, the upper protrusions 140a, 140b may extend into opposite channels 114 (i.e. from the first side 130a and the second side 130b, respectively) and may be staggered in the vertical direction such that adjacent upper sleeves 104a are retained at different vertical heights. Similarly, the lower protrusions 140c, 140d may extend into opposite channels 114 (i.e. from the first side 130a and the second side 130b, respectively) and may be staggered in the vertical direction such that adjacent lower sleeves 104b are retained at different vertical heights. Accordingly, the first upper protrusion 140a may be positioned at a first vertical height; the second upper protrusion 140b may be positioned at a second vertical height below the first vertical height; the first lower protrusion 140c may be positioned at a third vertical height below the second vertical height; and, the second lower protrusion 140d may be positioned at a fourth vertical height below the third vertical height. In some embodiments, the retaining protrusions 140 may be staggered in coordination with the staggered heights of the upper surface 144 of the one or more endwalls 142, such as depicted. Each of the upper protrusions 140a, 140b and lower protrusions 140c, 140d may be aligned with a coordinating protrusion of the adjacent retaining wall 112.

In embodiments, the splice sleeve holder 110 may be made from a material having some flexibility. For example, the splice sleeve holder 110 may be made from a rubber, thermoset, thermoplastic, composite, or any other suitable material. In some embodiments, the splice sleeve holder 110 may have sufficient flexibility to support multiple sizes of sleeves 104. In particular, in some embodiments, the splice sleeve holder 110 may have sufficient flexibility to accommodate a 250µm coated fiber and to additionally or alternatively accommodate a 900µm coated fiber, or any size therebetween. The retention features of the splice sleeve holder 110, such as the standoffs 132, the wave-like geometry of the retaining walls 112, the cavities 126, 128, the staggered arrangement of the sleeves 104, and the retaining protrusions 140, may individually or in combination enable the splice sleeve holder 110 to support larger sized sleeves (such as a 900µm coated fiber) without losing grip on a smaller sized sleeve (such as a 250µm coated fiber). For example, the cavities 126, 128 may enable sufficient isolated movement of the upper portion 120a and the lower portion 120b that a 900µm coated fiber may be retained at the upper portion 120a without flexing the lower portion 120b beyond the ability to retain a 250µm coated fiber. In some embodiments, the splice sleeve holder 110 may be injection molded, compression molded, cast, machined, additively printed, or otherwise manufactured.

Referring to FIGS. 2 and 4A in combination, the base substrate 106 of the splice sleeve holder 110 may be shaped to mate with the retention feature 150 of the fiber routing tray 100. For example, the base substrate 106 may be received within the recess 151 and held in place via tabs 152. In some embodiments, the base substrate 106 may be a continuous substrate. However, in some embodiments, the base substrate 106 may not be a continuous substrate but may include discontinuities formed therein. For example, the base substrate 106 may include a first portion 148a, a second portion 148b, and one or more intermediate portions 148c located between the first portion 148a and the second portion 148b. The retaining walls 112 may extend between and couple to the first portion 148a at the first 113a and to the second portion 148b at the second end 113b. The retaining walls 112 may also couple to the one or more intermediate portions 148c in between the first end 113a and the second end 113b. Between these locations, the base substrate 106 may be discontinuous. For example, the base substrate 106 may include be gaps positioned beneath locations of cavities 124 described herein, such as best depicted in FIG. 3. The removal of the base substrate 106 in these locations may further isolate movement of the upper and lower portions 120a and 120b and increase flexibility of the retaining walls 112 in these locations.

While it is noted that the plurality of retaining walls 112 may be substantially identical to one another. In some embodiments, retaining walls 112 positioned at the either end of the plurality of walls may have some various features. For example, such walls may not have cavities 124 as described above. Such increase robustness of the structure.

Embodiments of the present disclosure are further described with respect to the following numbered clauses:
1. A splice sleeve holder configured to retain splice sleeves includes a base substrate and plurality of retaining walls extending from the base substrate. The plurality of retaining walls includes a first retaining wall, a second retaining wall and a third retaining wall. Each of the plurality of retaining walls extend from a first end to a second end in a longitudinal direction. A first channel is defined between the first retaining wall and the second retaining wall. A second channel is defined between the second retaining wall and the third retaining wall. Each of the plurality of retaining walls includes one or more retaining protrusions, wherein the one or more retaining protrusions are arranged to retain a splice sleeve of the first channel in a vertically staggered configuration relative to a splice sleeve of the second channel.
2. The splice sleeve holder of clause 1, wherein the one or more retaining protrusions include upper protrusions and lower protrusions, the upper protrusions configured to retain an upper splice sleeve and the lower protrusions configured to retain a lower splice sleeve.
3. The splice sleeve holder of any preceding clause, further including an endwall having an upper surface configured to support at least a portion of the splice sleeves.
4. The splice sleeve holder of clause 3, wherein the upper surface alternates between a first height at the first channel and a second height at the second channel.
5. The splice sleeve holder of any preceding clause, wherein each of the plurality of retaining walls includes standoffs extending into one or more channels.
6. The splice sleeve holder of clause 5, wherein the standoffs include a first standoff disposed on a first side of a given retaining wall, a second standoff disposed on a second side of the given retaining wall, and a third standoff disposed on the first side of the given retaining wall, wherein the second standoff is longitudinally disposed between the first standoff and the third standoff.
7. The splice sleeve holder of any preceding clause, wherein each of the plurality of retaining walls includes a curvature extending in a lateral direction and creating a wave-like geometry.
8. The splice sleeve holder of clause 7, wherein the curvature includes a concave curve disposed between convex curves.
9. A splice sleeve holder configured to retain splice sleeves includes a base substrate and a plurality of retaining walls extending from the base substrate. Each of the plurality of retaining walls extends from a bottom surface to a top surface in a vertical direction and from a first end to a second end in a longitudinal direction. Each of the plurality of retaining walls includes an upper portion, wherein adjacent upper portions are arranged to retain an upper sleeve therebetween; and a lower portion, wherein adjacent lower portions are arranged to retain a lower sleeve therebetween beneath the upper sleeve. The lower portion includes a least one cavity extending from the bottom surface.
10. The splice sleeve holder of clause 9, wherein the upper portion includes an upper cavity extending from the top surface.
11. The splice sleeve holder of any of clauses 9-10, wherein the lower portion includes two cavities extending from the bottom surface.
12. The splice sleeve holder of any of clauses 9-11, wherein the plurality of retaining walls include a first retaining wall, a second retaining wall and a third retaining wall, wherein: a first channel is defined between the first retaining wall and the second retaining wall; a second channel is defined between the second retaining wall and the third retaining wall; and each of the plurality of retaining walls includes one or more retaining protrusions, wherein the one or more retaining protrusions are arranged to retain a splice sleeve of the first channel in a vertically staggered configuration relative to a splice sleeve of the second channel.
13. The splice sleeve holder of clause 12, further including an endwall having an upper surface configured to support at least a portion of splice sleeves.
14. The splice sleeve holder of clause 13, wherein the upper surface alternates between a first height at the first channel and a second height at the second channel.
15. A fiber routing tray includes a tray body, a splice sleeve holder configured to retain splice sleeves, and a recess. The splice sleeve holder includes a base substrate, a plurality of retaining walls extending from the base substrate, and one or more tabs. The plurality of retaining walls include a first retaining wall, a second retaining wall and a third retaining wall. Each of the plurality of retaining walls extend from a first end to a second end in a longitudinal direction. A first channel is defined between the first retaining wall and the second retaining wall. A second channel is defined between the second retaining wall and the third retaining wall. Each of the plurality of retaining walls comprises one or more retaining protrusions, wherein the one or more retaining protrusions are arranged to retain a splice sleeve of the first channel in a vertically staggered configuration relative to a splice sleeve of the second channel. The recess is configured to secure the one or more tabs to the tray body.
16. The fiber routing tray of clause 15, wherein each of the plurality of retaining walls includes standoffs extending into one or more channels.
17. The fiber routing tray of clause 16, wherein the standoffs include a first standoff disposed on a first side of a given retaining wall, a second standoff disposed on a second side of the given retaining wall, and a third standoff disposed on the first side of the given retaining wall, wherein the second standoff is longitudinally disposed between the first standoff and the third standoff.
18. The fiber routing tray of any of clauses 15-17, wherein each of the plurality of retaining walls includes a curvature extending in a lateral direction and creating a wave-like geometry.
19. The fiber routing tray of clause 18, wherein the curvature includes a concave curve disposed between convex curves.
20. The fiber routing tray of any of clauses 15-19, wherein the splice sleeve holder is compression molded.

In view of the above, it should now be understood that at least some embodiments of the present disclosure are directed to a splice sleeve holder configured to retain splice sleeves. In particular, embodiments of the present disclosure describe staggered channels which provide features for mounting multiple splice sleeves per channel, thereby providing for retention of a greater density of splice sleeves without sacrificing the retaining strength of the retaining walls.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A splice sleeve holder configured to retain splice sleeves comprising:
a base substrate; and
a plurality of retaining walls extending from the base substrate, the plurality of retaining walls comprising a first retaining wall, a second retaining wall and a third retaining wall, wherein:
each of the plurality of retaining walls extend from a first end to a second end in a longitudinal direction;
a first channel is defined between the first retaining wall and the second retaining wall;
a second channel is defined between the second retaining wall and the third retaining wall; and
each of the plurality of retaining walls comprises one or more retaining protrusions, wherein the one or more retaining protrusions are arranged to retain a splice sleeve of the first channel in a vertically staggered configuration relative to a splice sleeve of the second channel.

2. The splice sleeve holder of claim 1, wherein the one or more retaining protrusions comprise upper protrusions and lower protrusions, the upper protrusions configured to retain an upper splice sleeve and the lower protrusions configured to retain a lower splice sleeve.

3. The splice sleeve holder of claim 1 or claim 2, further comprising an endwall having an upper surface configured to support at least a portion of the splice sleeves and preferably wherein the upper surface alternates between a first height at the first channel and a second height at the second channel.

4. The splice sleeve holder of any preceding claim, wherein each of the plurality of retaining walls comprises standoffs extending into one or more channels.

5. The splice sleeve holder of claim 4, wherein the standoffs comprises a first standoff disposed on a first side of a given retaining wall, a second standoff disposed on a second side of the given retaining wall, and a third standoff disposed on the first side of the given retaining wall, wherein the second standoff is longitudinally disposed between the first standoff and the third standoff.

6. The splice sleeve holder of any preceding claim, wherein each of the plurality of retaining walls comprises a curvature extending in a lateral direction and creating a wave-like geometry, and preferably wherein the curvature comprises a concave curve disposed between convex curves.

7. A splice sleeve holder configured to retain splice sleeves comprising:
a base substrate; and
a plurality of retaining walls extending from the base substrate, wherein:
each of the plurality of retaining walls extends from a bottom surface to a top surface in a vertical direction and from a first end to a second end in a longitudinal direction; and
each of the plurality of retaining walls comprises:
an upper portion, wherein adjacent upper portions are arranged to retain an upper sleeve therebetween; and
a lower portion, wherein adjacent lower portions are arranged to retain a lower sleeve therebetween beneath the upper sleeve, the lower portion comprising at least one cavity extending from the bottom surface.

8. The splice sleeve holder of claim 7, wherein the upper portion comprises an upper cavity extending from the top surface.

9. The splice sleeve holder of claim 7 or claim 8, wherein the lower portion comprises two cavities extending from the bottom surface.

10. The splice sleeve holder of any one of claims 9 to 11, wherein the plurality of retaining walls comprise a first retaining wall, a second retaining wall and a third retaining wall, wherein:
a first channel is defined between the first retaining wall and the second retaining wall;
a second channel is defined between the second retaining wall and the third retaining wall; and
each of the plurality of retaining walls comprises one or more retaining protrusions, wherein the one or more retaining protrusions are arranged to retain a splice sleeve of the first channel in a vertically staggered configuration relative to a splice sleeve of the second channel.

11. The splice sleeve holder of claim 10, further comprising an endwall having an upper surface configured to support at least a portion of splice sleeves, and preferably wherein the upper surface alternates between a first height at the first channel and a second height at the second channel.

12. A fiber routing tray comprising:
a tray body;
a splice sleeve holder configured to retain splice sleeves comprising:
a base substrate;
a plurality of retaining walls extending from the base substrate, the plurality of retaining walls comprising a first retaining wall, a second retaining wall and a third retaining wall, wherein:
each of the plurality of retaining walls extend from a first end to a second end in a longitudinal direction;
a first channel is defined between the first retaining wall and the second retaining wall;
a second channel is defined between the second retaining wall and the third retaining wall; and
each of the plurality of retaining walls comprises one or more retaining protrusions, wherein the one or more retaining protrusions are arranged to retain a splice sleeve of the first channel in a vertically staggered configuration relative to a splice sleeve of the second channel; and
one or more tabs; and
a recess configured to secure the one or more tabs to the tray body.

13. The fiber routing tray of claim 12, wherein each of the plurality of retaining walls comprise standoffs extending into one or more channels.

14. The fiber routing tray of claim 13, wherein the standoffs comprises a first standoff disposed on a first side of a given retaining wall, a second standoff disposed on a second side of the given retaining wall, and a third standoff disposed on the first side of the given retaining wall, wherein the second standoff is longitudinally disposed between the first standoff and the third standoff.

15. The fiber routing tray of any preceding claim:
wherein each of the plurality of retaining walls comprises a curvature extending in a lateral direction and creating a wave-like geometry, and preferably wherein the curvature comprises a concave curve disposed between convex curves; and/or
wherein the splice sleeve holder is compression molded.
